# FASCICULE DE BREVET EUROPEEN

(11) **EP 3 461 012 B1**
(45) Date de publication et mention de la délivrance du brevet: **14.06.2023**
(21) Numéro de dépôt: 18192384.8
(22) Date de dépôt: 04.09.2018
(51) Int. Cl.: H04B 1/707

(54) **PROCEDE DE TRANSMISSION D'INFORMATIONS ADDITIONNELLES SUR DES SIGNAUX DE TRANSMISSION AVEC ETALEMENT DE SPECTRE ET SYSTEME ASSOCIE**
ÜBERTRAGUNGSVERFAHREN VON ZUSÄTZLICHEN INFORMATIONEN ÜBER ÜBERTRAGUNGSSIGNALE MIT SPEKTRUMSSPREIZUNG, UND ENTSPRECHENDES SYSTEM
METHOD AND ASSOCIATED SYSTEM FOR TRANSMITTING ADDITIONAL INFORMATION ON TRANSMISSION SIGNALS WITH SPREAD SPECTRUM

(30) Priorité: 26.09.2017 FR 1700985
(43) Date de publication de la demande: 27.03.2019
(73) Titulaire: Thales, 92400 Courbevoie (FR)
(72) Inventeur: MARTIN, Pauline, 31100 TOULOUSE (FR); CALMETTES, Thibaud, 31100 TOULOUSE (FR)
(74) Mandataire: Atout PI Laplace

(56) Documents cités:
- US-B2- 8 391 490

## Description

L'invention porte sur un procédé de transmission d'informations additionnelles sur des signaux de transmission avec étalement de spectre et un système associé.

Les séquences de codes utilisées lors de transmissions de signaux avec étalement de spectre sont composées d'une série d'impulsions nommées "chips" afin d'être distinguées des "bits" qui composent une séquence de données.

Le domaine de l'invention est celui la création d'informations supplémentaires sur une transmission de signaux en spectre étalé. Cela peut notamment s'avérer utile lorsqu'on dispose d'un canal déjà totalement défini sur lequel on désire ajouter de l'information, par exemple dans un contexte de système d'alerte et de localisation de radiobalises de localisation de sinistre, tels Cospas/Sarsat, ou dans le cadre du signal de navigation d'un satellite GNSS. Bien que la problématique puisse être applicable à un contexte de signaux de navigation, elle est surtout intéressante dans un contexte de communication.

Pour ajouter de l'information encodée sur un signal en spectre étalé, la solution la plus simple consiste à découper le code en plusieurs sous-ensembles de code et à ajouter du contenu binaire sur des portions du code découpé en remplaçant les chips par leur complémentaire ou non. Cela revient à utiliser les techniques de type TMBOC non pas à partir d'une voie purement pilote pour créer de la donnée, mais pour créer de la donnée sur de la donnée. Cette approche a pour défaut d'être déterministe (la position de la portion de code modifiée et le nombre de chips modifiés doivent être prédéfinies à l'avance), et d'être donc faiblement adaptable au contexte de réception, à moins d'établir un découpage par utilisateur qui est très lourd en termes de coûts (consommation de la bande et logique d'interrogation). En outre, elle nécessite une modification des corrélateurs de désétalement afin de pouvoir gérer ce découpage, et peut donc nécessiter un changement significatif des récepteurs, notamment dans le cas le plus usuel où le désétalement est réalisé par un composant intégré. Enfin, cette technique est peu discrète car il sera assez simple d'observer la dégradation temporelle du code par paquet de chips, simplement par exemple en faisant une moyenne sur plusieurs codes successifs, ce qui peut être gênant dans certains contextes.

Il est également connu un procédé nommé "Watermarking" en langue anglaise, décrit par exemple dans le brevet européen EP 2188943 B1 (Thales) ou le brevet américain US 8391490 B2 (Thales), et qui consiste à insérer une information supplémentaire à des positions fixes et connues à l'intérieur des différents codes d'étalement du signal de navigation. Il est introduit une dégradation dans la réception du signal, mais l'amplitude de cette dégradation est fixe et de position connue. Cette solution a notamment les inconvénients de demander une modification du récepteur pour l'adapter à l'extraction de cette information. Cela la limite donc à des fonctions de post-traitement, et elle est donc limitée à des processus d'authentification de signal par des chaînes de réception centralisées dédiées, et non par le récepteur utilisateur lui-même. La répétitivité du bloc de chip modifié peut de plus la rendre repérable.

Un but de l'invention est de pallier les problèmes précédemment cités, et notamment de permettre une implémentation indépendante de la couche de corrélation du récepteur, qui ne nécessite pas de modification de celle-ci.

Il est proposé, selon un aspect de l'invention, un procédé de transmission d'informations additionnelles variables sur des signaux de communication ou de navigation avec étalement de spectre, les informations additionnelles étant codées par une variation d'une dégradation volontaire quantifiée de la corrélation du code d'étalement, la dégradation étant codée sur le code d'étalement par modification d'au moins un chip.

Un tel procédé permet d'ajouter de l'information sur des signaux de communication ou de navigation avec étalement de spectre de manière flexible (selon le taux de bonne démodulation visé sur ces informations ajoutées et selon la dégradation tolérée sur le signal initial), sans modification de l'étage de corrélation pour le récepteur, et de manière possiblement discrète et non déterministe comme dans l'état de l'art précédemment cité.

Selon l'invention, le code d'étalement comprenant N chips et une tolérance de dégradation valant x dB, on modifie jusqu'à K chips sur chaque série de N chips codant chacune un symbole, et on transmet 2*^{K}* valeurs d'information additionnelle, avec K=1/2 N (1-10^{-(x/10)}).

Ainsi, il est possible de coder une importante quantité d'information, tout en étant moins détectable que dans l'état de l'art et non déterministe, sans modification de l'étage de corrélation du récepteur.

Selon un mode de mise en oeuvre, une dégradation de corrélation est répétée plusieurs fois de suite.

Il est ainsi possible d'atteindre une probabilité d'erreur de démodulation de l'information ajoutée inférieure à la probabilité d'erreur d'estimation d'information supplémentaire sur une seule occurrence du code d'étalement.

Dans un mode de mise en oeuvre, une même quantité de dégradation de corrélation (l'information ajoutée) est répétée plusieurs fois de suite par codage identique sur le code d'étalement.

Le fait de modifier toujours les même chips pour coder la même information est intéressant pour faciliter la démodulation, en augmentant la probabilité de détection et de bonne démodulation de la dégradation.

En variante, la même quantité de dégradation de corrélation (l'information ajoutée) est répétée plusieurs fois de suite mais par codage d'au moins deux manières différentes sur le code d'étalement.

En utilisant plusieurs codages pour coder la même quantité de dégradation(sur les 2^{K} possibilités de dégradation du code, on en utilise plusieurs pour la même dégradation) dans la répétition de dégradation de la corrélation, la démodulation est moins aisée, mais si la voie a un défaut, on ne perd pas à chaque fois la même information, et c'est moins détectable que la répétition de la dégradation par codage identique sur le code d'étalement.

Dans un mode de réalisation, au moins une valeur de dégradation est interdite parmi les 2^{K} possibles.

Ainsi, il est possible de réaliser des paliers de dégradation, ce qui facilite la démodulation

Selon un mode de mise en oeuvre, la transmission d'informations est effectuée de manière entremêlée sur une pluralité de voies de communication, et les dégradations de corrélation correspondantes sont appliquées sur les différentes voies de communication.

Ainsi, la bonne réception de l'information supplémentaire est obtenue même si une voie particulière est atténuée (pour une raison quelconque autre que la dégradation volontaire).

Dans un mode de mise en oeuvre, les différentes dégradations de corrélation sont appliquées à des instants différents sur des voies différentes.

Ainsi, on multiplexe l'addition d'informations supplémentaires indépendantes, qui peuvent de plus avoir des taux de bonne détection différents, et donc être adaptées à des rapports signal-à-bruit différents.

Selon un mode de mise en oeuvre, les dégradations de corrélation sont appliquées sur deux voies, une voie pilote et une voie données.

Selon un autre aspect de l'invention, il est également proposé un système de transmission d'informations additionnelles sur des signaux de communication ou de navigation avec étalement de spectre, configuré pour mettre en oeuvre le procédé tel que précédemment décrit.

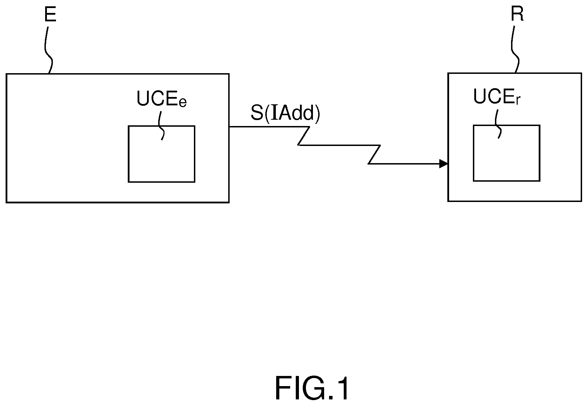

L'invention sera mieux comprise à l'étude de quelques modes de réalisation décrits à titre d'exemples nullement limitatifs et illustrés par le dessin sur lequel la figure 1 illustre schématiquement un mode de mise en oeuvre du procédé selon un aspect de l'invention.

La figure 1 représente schématiquement un système classique dans lequel est mis en oeuvre le procédé de l'invention.

Le système comprend un émetteur E muni d'une unité de commande électronique UCEe et un récepteur R muni d'une unité de commande électronique UCEr. Les unités de commande électronique comprennent les composants classiques capables d'effectuer le traitement de signaux de communication ou de navigation.

L'unité de commande électronique UCEe de l'émetteur E transmet des signaux S reçus par l'unité de commande électronique UCEr du récepteur R.

Des informations additionnelles IAdd variables sont transmises sur les signaux S de communication de navigation avec étalement de spectre. Ces informations additionnelles IAdd sont codées par une variation d'une valeur de dégradation DC volontaire quantifiée de la corrélation du code d'étalement, la dégradation DC étend codée sur le code d'étalement par modification d'au moins un chip.

Selon l'invention, le code d'étalement comprend N chips et la tolérance de dégradation vaut x dB. On modifie jusqu'à K chips sur chaque série de N chips codant chacune un symbole respectif, et on transmet 2*^{K}* valeurs pour une information additionnelle, avec x=-10.log₁₀[(N-2K)/N], ou en d'autres termes K=1/2 N (1-10^{-(x/10)}).

Dans un fonctionnement normal de traitement spectre étalé, l'émetteur et le récepteur se mettent d'accord sur un code d'étalement, qui consiste à remplacer un bit de données 1 par ce code d'étalement et un bit de données 0 par ce code complémentaire.

Par exemple, si on définit le code d'étalement 011010010101 on va coder la séquence de bits 1 0 0 1 par la suite de chips 011010010101 100101101010 100101101010 011010010101. On appelle symbole un bit encodé avec le code d'étalement et chip la brique unitaire du code d'étalement (0 ou 1 ici).

A chaque symbole, le récepteur fait la corrélation entre le signal reçu (recalé en temps et fréquence) et le code d'étalement et va obtenir par exemple +1 pour les bits codant l'information 1 et -1 pour les bits codant l'information 0, ce qui lui permet de démoduler le message d'origine.

Le principe de la présente invention consiste à coder de l'information dans la dégradation des corrélations. Une première manière simple est d'avoir le même rythme d'information supplémentaire que le code d'étalement d'origine. A chaque fois que le code d'étalement est répété on code de l'information additionnelle.

Par exemple, avec l'élément précédent, on code la séquence d'information additionnelle 1 1 0 1 en modifiant un chip sur chacun des deux premiers symboles, aucun chip sur le troisième symbole et à nouveau un chip sur le dernier symbole.

Un des aspects intéressants de l'invention est que la position du chip modifié n'importe pas. Toujours sur cet exemple, cela donne par exemple la séquence de chips :
0110100101**1**1 1001**1**1101010 100101101010 01**0**010010101, ou la séquence 01**0**010010101 **0**00101101010 100101101010 0110100101**1**1. Ces deux séquences codent exactement la même information additionnelle, à savoir 1101.

Le récepteur R observe sur les corrélations une dégradation de respectivement 1/12^{ème}, 1/12^{ème}, 0, 1/12^{ème} soit en dB une dégradation de 0.38dB, 0.38dB, 0.0dB, 0.38dB, et en déduit la séquence correspondante 1 1 0 1 d'information supplémentaire.

Selon l'invention, le code d'étalement comprend N chips et une tolérance de dégradation de x dB, on modifie jusqu'à K chips sur chaque série de N chips codant chacune un symbole respectif, et on transmet 2*^{K}* valeurs pour une information additionnelle, avec x=-10.log₁₀[(N-2K)/N].

Il est également possible avoir un rythme d'information supplémentaire plus lent que le rythme du code d'étalement. Il est alors possible de répartir la dégradation appliquée sur plusieurs symboles (une répétition du code d'étalement), ce qui permet de minimiser la dégradation sur chaque symbole tout en pouvant maintenir la démodulation des informations additionnelles.

Par exemple, si on dispose d'un code d'étalement d'une longueur de 30 chips, et qu'on tolère une dégradation sur celui-ci de 3 chips maximum (perte de 0.46 dB au pire, de 0.22 dB en moyenne) par rapport à l'usage nominal, alors on peut coder de l'information additionnelle en dégradant entre 0 et 3 chips par symboles (ne modifier aucun chip sur un symbole c'est coder l'information additionnelle 0). Si on observe que la précision de mesure de la dégradation de corrélation au niveau du rapport signal à bruit de réception est telle que la probabilité de se tromper d'estimation sur un chip d'information supplémentaire dans un symbole est de 10% alors qu'on veut une probabilité d'erreur de démodulation des chips d'information supplémentaire (équivalent d'un taux d'erreur binaire) de 1%, il faut répéter 10 fois la même dégradation pour s'assurer d'obtenir ce taux. Ainsi, pour écrire la séquence d'information binaire 3102, les dégradations appliquées sur les symboles successifs sont les suivantes: 3333333333111111111100000000002222222222.

Le premier 3 représente un symbole (le code d'étalement ou son complémentaire binaire codant un bit du message à transmettre) soit 30 chips dans lesquels on a modifié 3 chips. Puis on répète cette dégradation de 3 chips sur les 9 symboles suivant pour avoir 10 répétitions et on fait pareil pour les autres informations supplémentaires à coder. On a donc utilisé un message binaire de 40 bits pour encoder cette information.

L'invention nécessite d'avoir des récepteurs adaptés, et contrairement à l'état de l'art, un récepteur non adapté a énormément de difficulté à identifier l'information additionnelle car elle est aléatoirement répartie dans l'encodage du message binaire d'origine.

En outre, on note que les dégradations peuvent être intermittentes, et qu'elles peuvent être appliquées sur une pluralité de voies, par exemple sur une voie donnée et une voie pilote. L'intérêt est d'ouvrir la possibilité de multiplexer plusieurs informations supplémentaires indépendantes, qui peuvent de plus avoir des taux de bonne détection différents, et donc être adaptées à des rapports signal à bruit différents.

### Par exemple :

- On définit deux niveaux: un où on code par pas de 15% de dégradation de corrélation et un où on code par pas de 5% de dégradation de corrélation. Pour le premier niveau, on modifie un bit sur deux et en alternance entre la voie pilote et la voie données ou code. Pour le deuxième niveau, on modifie un bit sur quatre sur la voie donnée (et décalé par rapport au premier niveau).
- On peut coder sur le premier niveau 15%, 30%, 0%, 45%, 30%, 15%, 0%, 15% (équivalent de 1, 2, 0, 3, 2) et 10% et 35% (équivalent de 2, 7, 8, 8) sur le deuxième niveau.
- Cela donne (P = voie pilote, C = voie données) :
   La dégradation de niveau 1 est représentée en gras et la dégradation de niveau 2 en souligné.

| | | | | | | | | | | | | | | | |
|---|---|---|---|---|---|---|---|---|---|---|---|---|---|---|---|
| P (%) | 0 | 0 | **15** | 0 | 0 | 0 | **30** | 0 | 0 | 0 | **30** | 0 | 0 | 0 | **0** |
| C (%) | **15** | 10 | 0 | 0 | **15** | 10 | 0 | 0 | **30** | 35 | 0 | 0 | **0** | 35 | 0 |

| | | | | | | | | | | | | | | | | |
|---|---|---|---|---|---|---|---|---|---|---|---|---|---|---|---|---|
| P (%) | 0 | 0 | 0 | **45** | 0 | 0 | 0 | **45** | 0 | 0 | 0 | **30** | 0 | 0 | 0 | **15** |
| C (%) | 0 | **0** | 40 | 0 | 0 | **45** | 40 | 0 | 0 | **30** | 40 | 0 | 0 | **30** | 40 | 0 |

Le tableau indique pour chaque symbole de code (une colonne correspond à un symbole) le pourcentage de dégradation de la corrélation appliqué. Sur cet exemple et ces données, on a dégradé le pilote de 5% (0.2 dB) et le code de 11% (0.5 dB).

## Revendications

1. Procédé de transmission d'informations additionnelles variables (IAdd) sur des signaux (S) de communication ou de navigation avec étalement de spectre, les informations additionnelles (IAdd) étant codées par une variation d'une dégradation (DC) volontaire quantifiée de la corrélation du code d'étalement, la dégradation (DC) étant codée sur le code d'étalement par modification d'au moins un chip, **caractérisé en ce que**, le code d'étalement comprenant N chips et une tolérance de dégradation valant x dB, on modifie jusqu'à K chips sur chaque série de N chips codant chacune un symbole, et on transmet 2*^{K}* valeurs d'information additionnelle, avec K=1/2 N (1-10^{-(x/10)}).

2. Procédé selon l'une des revendications précédentes, dans lequel une dégradation (DC) de corrélation est répétée plusieurs fois de suite.

3. Procédé selon la revendication 2, dans lequel une même quantité de dégradation de corrélation est répétée plusieurs fois de suite par codage identique sur le code d'étalement.

4. Procédé selon la revendication 2, dans lequel une même quantité de dégradation de corrélation est répétée plusieurs fois de suite par codage d'au moins deux manières différentes sur le code d'étalement.

5. Procédé selon l'une des revendications précédentes, dans lequel la transmission d'informations est effectuée de manière entremêlée sur une pluralité de voies de communication, et les dégradations (DC) correspondantes de corrélation sont appliquées sur les différentes voies de communication.

6. Procédé selon la revendication 5, dans lequel les différentes dégradations (DC) de corrélation sont appliquées à des instants différents sur des voies différentes.

7. Procédé selon l'une des revendications précédentes, au moins une valeur de dégradation est interdite parmi les 2^{K} possibles.

8. Procédé selon l'une des revendications 5 à 7, dans lequel les dégradations (DC) de corrélation sont appliquées sur deux voies, une voie pilote et une voie données.

9. Système de transmission d'informations additionnelles (IAdd) sur des signaux (S) de communication ou de navigation avec étalement de spectre, configuré pour mettre en oeuvre le procédé selon l'une des revendications précédentes.

## Patentansprüche

1. Verfahren zum Übertragen variabler Zusatzinformationen (IAdd) auf Kommunikations- oder Navigationssignalen (S) mit Spektrumsspreizung, wobei die Zusatzinformationen (IAdd) durch eine Variation einer quantifizierten freiwilligen Minderung (DC) der Korrelation des Spreizcodes codiert werden, wobei die Minderung (DC) durch Modifikation mindestens eines Chips auf den Spreizcode codiert wird,
**dadurch gekennzeichnet, dass**
der Spreizcode N Chips und eine Minderungstoleranz von x dB umfasst, bis zu K Chips auf jeder Serie von N Chips, die jeweils ein Symbol codiert, modifiziert werden und 2*^{K}* Zusatzinformationswerte übertragen werden, wobei K=1/2 N (1 -10 ^{-(x/10)}) ist.

2. Verfahren nach einem der vorhergehenden Ansprüche, wobei eine Korrelationsminderung (DC) mehrmals hintereinander wiederholt wird.

3. Verfahren nach Anspruch 2, wobei ein selber Korrelationsminderungsbetrag mehrmals hintereinander durch identische Codierung auf dem Spreizcode wiederholt wird.

4. Verfahren nach Anspruch 2, wobei derselbe Korrelationsdegradationsbetrag mehrmals hintereinander durch Codierung auf mindestens zwei verschiedene Weisen auf den Spreizcode wiederholt wird.

5. Verfahren nach einem der vorhergehenden Ansprüche, wobei die Informationsübertragung über eine Vielzahl von Kommunikationskanälen verteilt erfolgt und die entsprechenden Korrelationsminderungen (DC) auf die verschiedenen Kommunikationskanäle angewendet werden.

6. Verfahren nach Anspruch 5, wobei die verschiedenen Korrelationsminderungen (DC) zu verschiedenen Zeitpunkten auf verschiedene Kanäle angewendet werden.

7. Verfahren nach einem der vorhergehenden Ansprüche, mindestens ein Minderungswert aus den 2*^{K}* möglichen ist verboten.

8. Verfahren nach einem der Ansprüche 5 bis 7, wobei die Korrelationsminderungen (DC) auf zwei Kanäle, einen Pilotkanal und einen Datenkanal, angewendet werden.

9. System zur Übertragung von Zusatzinformationen (IAdd) auf Kommunikations- oder Navigationssignalen (S) mit Spektrumsspreizung, konfiguriert zur Durchführung des Verfahrens nach einem der vorhergehenden Ansprüche.

## Claims

1. A method for transmitting variable additional information (IAdd) on communication or navigation signals (S) with spectrum spreading, the additional information (IAdd) being coded by a variation of an intentional quantised degradation (DC) of the correlation of the spreading code, the degradation (DC) being coded on the spreading code by modifying at least one chip,
**characterised in that**,
the spreading code comprising N chips and a degradation tolerance of x dB, up to K chips are modified on each series of N chips coding a symbol, and 2*^{K}* values of additional information are transmitted, with K=1/2 N (1-10^{-(x/10)}).

2. The method according to one of the preceding claims, wherein a degradation (DC) of correlation is repeated several times in a row.

3. The method according to claim 2, wherein one and the same amount of correlation degradation is repeated several times in a row by identical coding on the spreading code.

4. The method according to claim 2, wherein one and the same amount of correlation degradation is repeated several times in a row by at least two different ways of coding on the spreading code.

5. The method according to one of the preceding claims, wherein the transmission of information is performed in an intermingled manner over a plurality of communication channels, and the corresponding degradations (DC) of correlation are applied on the various communication channels.

6. The method according to claim 5, wherein the various degradations (DC) of correlation are applied at different times on different channels.

7. The method according to one of the preceding claims, at least one degradation value is prohibited from among the 2*^{K}* possible values.

8. The method according to one of claims 5 to 7, wherein the degradations (DC) of correlation are applied on two channels, a pilot channel and a data channel.

9. A system for transmitting additional information (IAdd) on communication or navigation signals (S) with spectrum spreading, configured to implement the method according to one of the preceding claims.
